# EUROPEAN PATENT APPLICATION

(11) **EP 2 085 973 A1**
(43) Date of publication of application: **05.08.2009**
(21) Application number: 06809621.3
(22) Date of filing: 17.10.2006
(51) Int. Cl.: G11B 27/10, G11B 20/12

(54) **SYSTEM AND METHOD FOR RECORDING DATA ON A MULTI-SESSION OPTICAL RECORDING DISC WITH AUTORUN**

(71) Applicant: Soft-R Research LLC, Dover, DE 19901 (US)
(72) Inventor: PINSON, Jean Marc, F-73490 La Ravoire (FR)
(74) Representative: Barlocci, Anna
(86) International application number: PCT/IB2006/053818
(87) International publication number: WO 2008/047178

(57) **Abstract**

The invention relates to a method for recording data on a optical recording disc, using means for controlling the recording, said method comprising the steps of (A) obtaining the data to be recorded on the optical recording disc; (B) adding said data to a new recording session; (C) adding the means for controlling the recording to the new recording session, at least when the optical recording disc does not have to be finished after the recording of said new recording session; (D) recording said new recording session on the optical recording disc. A simple way of recording the data on an optical recording disc is achieved.

## Description

The present invention relates to a method for recording data on an optical recording disc, using control means of the recording. More specifically, it relates to a method for recording data in an optical recording disc, in which a computer program is executed automatically for controlling the recording each time the optical recording disc is inserted in a computer.

The invention also relates to a system for recording data in an optical recording disc.

### Background of the invention

Optical recording discs are widely known in the state of the art, such as CD or DVD (CD-R, DVD-R, DVD+R, etc.), in which it is possible to record a large amount of data (above all the DVD type), for example, computer programs or multimedia files (text, audio, video, images, etc.), using suitable recording programs.

Optical recording discs are widely used in the Computer Industry and among personal computer users, but still retain an endemic difficulty in its use, especially among old users.

In some cases, said optical recording discs are initially provided with a computer program and/or other kind of files, in a first "track" (if it is a CD) or a first "zone" (if it is a DVD). This pre-recorded disc can be generated creating an initial ROM (Read Only Memory), before the recordable area, obtaining a hybrid disc, or it could also be created pre-recording the first track or zone of an empty optical recording disc (for example, a CD-R, a DVD-R or a DVD+R). Said first track or zone may contain computer programs and/or certain files (for example, autorun files) that, whenever the disc is inserted in the computer, automatically cause the execution of one or several of said computer programs, guiding the user through the process of transferring data from the computer to the recordable area in the correspondent CD or DVD.

In most of the cases, said optical recording discs also incorporate a mechanism known as multi-session, which allows the recording of data in different sessions, each of them in a different precise moment. Therefore, said optical recording discs are recorded in a manner in which they can be reused, adding new data to the data that is already recorded.

Said mechanism presents the disadvantage that, because the operating system always reads the last recorded session in the optical recording disc by default, if the data from the previously recorded sessions is not properly connected while the new recording session is being done, said data becomes non-readable to the user. Said disadvantage worsens the difficulty of use of the optical recording discs, since a lot of users do not know the need of carrying out said connection, and so they lose the recorded data from previous sessions; or they do not know the steps to follow to carry out said connection; or, even knowing the need of carrying out said connection, they forget of doing it at the moment of the recording of the new session.

On the other hand, in case that the optical disc incorporates the multi-session mechanism and a first pre-recorded track or zone, the computer programs and the files contained in said first track or zone are only accessible by the user for the recording of the first session. For subsequent sessions it will be necessary to use another (previously installed) data recording program in the disc, with the disadvantage which that entails (graphic user interface (GUI), GUI structure, idiom, etc.).

### Summary of the invention

From all the described above, it is an object of the present invention to provide a method for recording data in an optical recording disc in a simple manner. This object is achieved with claim 1, providing a method for recording data in an optical recording disc, using means for controlling the recording, which comprises the steps of:
A) Obtaining the data to be recorded in the optical recording disc;
B) Adding said data to a new recording session;
C) Adding the means for controlling the recording of a new recording session, at least when the optical recording disc does not have to be finished after the recording of said new recording session;
D) Recording said new recording session in the optical recording disc.

Obviously, the method may be repeated until the optical recording disc is full.

This way, the fact that the means for controlling the recording are added in each recording session involves that said means (normally comprise a computer program for controlling the recording) are always available to the user, so that, in any given time and in any other computing system that incorporates a suitable device for the recording of data in the optical recording disc, the user may do a new recording, without the need of, for example, installing a data recording program (it is already comprised in the means for controlling the recording), search an associated file (for example, the executable file of the program or a direct access to said executable file) that allows the execution of said recording program by means of the user interface of the operating system, or working with a recording program the operation of which the user does not know (specific user interface, etc.).

Basically, what is achieved is that the user always uses the same means for controlling the recording, so it is only needed to know the operation of said means, independently of where he is localized or which computer he is using. Furthermore, since he always uses the same recording program, the interface's language is suitable for the user, depending on which he chose.

On the other hand, the means for controlling the recording may comprise all the necessary parts for executing itself in an autonomous way, in a given operating system.

The method may also comprise a step (X) of verification of whether the optical recording disc may be finished, being the verification proper to avoid adding the means for controlling the recording in the last recording session (it cannot be used again), leaving more free storage space for including other data that the user may wish to record.

In this way, in case of positive result of verification step (X), after the step (D) for recording the data in the optical recording disc, the optical recording disc must be finished, so it cannot be recorded again.

Alternatively, the recording of said means for controlling the recording can be made in all the sessions, regardless whether the optical recording disc is to be finished or not.

The method may also comprise a step (E) for verifying whether the means for controlling the recording are executed on the optical recording disc, and, in case the result is positive in said step (E), the method may comprise the steps of:
F) Copying the means for controlling the recording in a safe area of the operating system;
G) Executing the means for controlling the recording, from the safe area of the operating system;
H) Closing the means for controlling the recording, which are being executed from the optical recording disc.

In this way, the means for controlling the recording may maintain their execution and also be receptive to any action, coming from, for example, the user or a computer program, while the optical recording disc is being recorded (when data is being recorded in an optical recording disc, said disc is temporarily not accessible by the operating system, whereas the files of a computer program, during its execution, must always be accessible by the operating system).

In case the result of the described step (E) is negative, the control of the method may go to step (A) of obtaining the data to record in the optical recording disc, because it states that the means for controlling the recording are being executed on the safe area of the operating system.

According to another aspect, the invention provides a system for recording data in an optical recording disc, using means for controlling the recording which comprise means to obtain the data to be recorded in the optical recording disc; means to add said data in a new recording session; means to add the means for controlling the recording to the new recording session, at least when the optical recording disc may not be finished after the recording of said new recording session; and means for recording the new recording session in the optical recording disc.

According to a preferred embodiment of the invention, the optical recording disc is provided with the means for controlling the recording, so that, as early as in the first recording session, the user can have at his disposal said means. Therefore, the user can record data in the optical recording disc without the need of installing a recording program in the computer.

This way, for example, the optical recording disc may comprise a read-only area and a recordable area, and the means for controlling the recording may be pre-recorded in said read-only area of the optical recording disc. In this manner, when the optical recording disc is inserted for the first time in a recording device, the user may access to said read-only area and execute the means for controlling the recording.

Alternatively, the means for controlling the recording may be pre-recorded in the optical recording disc, in a recording session, in a way that, when the optical recording disc is inserted for the first time in a recording device, the user has access to said means for controlling the recording.

Obviously, it is also possible that the optical recording disc is provided empty and the means for controlling the recording are located in the computer where the recording is going to take place. In that case, the means for controlling the recording may be added or not to the new session that is going to be recorded by the user.

Preferably, the means for controlling the recording comprise a computer program for controlling the recording, which may be used, for example, to record data on the optical recording disc. In order to do that, the program may comprise, among others, a module for generating and displaying a graphic user interface, from which a user may browse through the files contained within the computer, select those that he wishes to record, and cause its recording on the optical recording disc.

According to an embodiment of the invention, the means for controlling the recording comprise an autorun file of the computer program for controlling the recording. Said autorun file forces the operating system of the computing system to do fixed operations when the optical recording disc is inserted in a suitable device. Said operations may be, among others, executing the computer program for controlling the recording included in the optical recording disc, so that, for using the program, it is not necessary to the user to search said program (there is no need to access the disc content), or installing it. In summary, when the disc is inserted in the computer, the operating system recognizes the autorun file and executes the computer program for controlling the recording.

According with another aspect of the invention, a computer program is provided, which comprises program instruction that are executed in the computing system to make the method of recording data on a described optical recording disc.

Said computer program may be stored in storing means, such as recording means, a computer memory, or a read-only memory, or can be carried by a carrier wave, such as an electrical carrier wave or an optical carrier wave.

### Brief description of the drawings

For a better understanding of what it has been set out, drawings are herein accompanied in which, schematically and only by way of non limitative example, a practical case of embodiment is shown.

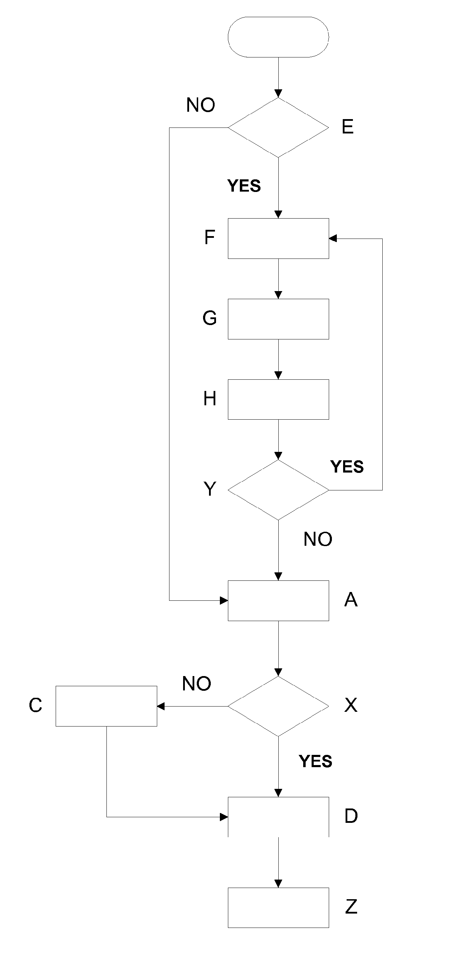

In the drawing,
The single figure shows a flow chart of the method for recording data on an optical recording disc, according to the present invention.

### Description of a preferred embodiment of the invention

In the following, a preferred embodiment of the invention will be described, in which the optical recording disc is of the kind of a recordable DVD (Digital Versatile Disc, DVD-R or DVD+R), that allows multi-session. It could also be of any other kind of optical recording device, such as a rewritable CD (Compact Disc), or a rewritable DVD.

The multi-session is a mechanism that allows recording data on the DVD in several sessions, each one of them in different moments. All of the sessions recorded on the DVD are linked, in a way that the sessions are shown as a single logical device when the operating system of the computer mounts the DVD. Each session may contain one or several tracks, if it is a CD, or one or several zones, if it is a DVD. It is important to highlight that, in some cases, for the data to be readable in a DVD or DVD-ROM drive, the disc has to be finished and, once finished, more data cannot be recorded on it. Moreover, any operating system always reads the last recorded session on the DVD by default, so that the data recorded on previous zones that are not linked properly while the new recording session is being done, is converted into inaccessible data for the user.

On the other hand, DVD also contains a computer program for controlling the data recording on the recordable area of the DVD, as well as an autorun file that causes the starting of the computer program for controlling the recording, when the DVD is inserted on the personal computer (specifically in a DVD burner). Obviously, the computer program may comprise a plurality of modules for the different actions to be done, or there may be a plurality of computer programs to do said actions.

The incorporation of the computer program for controlling the recording and the autorun file of said computer program on the DVD may be done according to, for example, two known techniques:
In a hybrid DVD: the computer program and the autorun file are recorded on the read-only area (ROM, Read Only Memory) of the DVD, while the data is recorded in the recordable area of the DVD.
In an empty recordable DVD: a pre-recording of the first session of the empty DVD is done, comprising said first session the computer program and the autorun file of said computer program. In this case, the recordable area of the DVD starts in the zone next to the zone or zones occupied by said first recording session.

Whatever technique is used, it is clear that the DVD can be replicated via hybrid technique or via normal pre-recording, which allows it to be sold at a standard price, that is, at a price approximately the same as the one of a recordable or rewritable empty DVD.

As shown on the single figure, starting from the initial situation in which the DVD is inserted for the first time into the personal computer, the operating system of the computer recognizes the autorun file contained in the DVD and causes the starting of the computer program for controlling the recording, the method according to the invention comprises a step (E) where the computer program, by means of a first module, verifies whether the computer program is executed on the DVD. In case of a positive result in said step (E), the computer program, by means of a second module, copies itself in a safe area of the operating system, in a step (F); and, in a step (H), a fourth module causes the shut down of the computer program that is executed on the DVD. In this way, the computer program may maintain its execution and also be receptive to any action, coming from, for example, the user or another module or another computer program, while the DVD is being recorded (when data is being recorded in an optical recording disc, said disc is temporarily not accessible by the operating system, whereas the files of a computer program, during its execution, must always be accessible by the operating system).

Several mechanisms exist in the Microsoft Windows Application Program Interface (also known as "Win API 32" or "Win32"), that allow detecting (step (E)) from which device an application program has been launched. There also exist other mechanisms also exist that allow knowing which kind of unit is a specific device. In this way, using said described mechanisms, it is possible to detect whether the program for controlling the recording has launched from the DVD or from the safe area of the operating system. Furthermore, to increase the security in the verification of step (E), it is possible to set whether the files contained in the DVD are exactly the same (in a properties level) as the ones that are recorded in the DVD. Obviously, depending on the operating system installed on the computer, said mechanisms may be different, although the obtained result should be the same.

To do the copy of the program for controlling the recording and the autorun file in the safe area of the operating system, a sub-folder may be created (for example, referenced as "SoftR") in the *Windows System* directory, where the program for controlling the recording and the autorun file of said program are copied (although said file may not be necessary). The program comprised in said sub-folder is the one that is executed to, in the following, closing the one that is being executed on the DVD. It is important to highlight that the program that is copied in the "SoftR" sub-folder is the one that is being executed on the DVD, that is, the program that is being executed on the DVD copies itself in the sub-folder "SoftR".

Two basic reasons exist to consider the directory Windows System as a safe area. Firstly, most of the users cannot enter said directory without changing several default configurations in the operating system. Secondly, the program for controlling the recording may be executed without problems even when the DVD (from which it has launched initially) is temporarily inaccessible because of the commands that have been sent to the device while it was recording.

From the execution of step (G), where the third module of the computer program causes the launch of said computer program in said safe area of the operating system, in a step (Y), the first module verifies again (since the computer program is being executed again) whether said computer program for controlling the recording is executed on the DVD. Obviously, since the computer program, in said point of the method, always is executed in the safe area of the operating system, it is possible to avoid said step (Y), but it is added to the present description to achieve more clarity in the description.

In any case, in the following, the computer program, in a step (A), by means of a fifth module, shows an users interface (for example, a graphic user interface, GUI) that allows navigating the data and obtaining the data that is to be recorded on the optical recording disc, for example, by means of the selection of said data.

In a step (X), a sixth module verifies whether the DVD has to be finished after the recording of the new recording session. Said verification may be done, for example, from the status of a control element, such as a "checkbox" element type, represented in the users interface. In case of positive result in said step (X), a seventh module of the computer program, according to a step (D), records the new recording session (it contains only the data selected by means of the users interface), in the recordable area of the DVD, and, in a step (Z), the fourth module closes the computer program.

In case of negative result in said step (X), in a step (C), an eighth module adds the own computer program and the autorun file, to the new recording session, and, in step (D), the seventh module records on the recordable area of the DVD, more specifically, on the corresponding zones of the recordable area, the new recording session, which comprises the selected data, the computer program and the autorun file. Following that, in step (Z), the fourth module causes the closing of the computer program.

In both cases, after the recording of the new recording session, it may exist a step that causes the ejection of the DVD, from the DVD burner, so that the user may remove it.

Regarding the incorporation of the program for controlling the recording and the autorun file in the new recording session, the program basically copies itself in the new recording session (the same copy that is being executed). Therefore, it copies from the safe area (Windows System directory), to the new recording session of the DVD.

In this way, when the DVD is inserted a second time or subsequent time in a computer, being the described until now or another one, its operating system recognizes the autorun file and causes the launch of the computer program for controlling the recording, and the described method is repeated. In this way, the computer program, previously recorded on the DVD, executes automatically when the DVD is inserted in the DVD burner, adds data to the new recording session, and it adds itself in said new recording session, so that is executed again in the next insertion of the DVD in a DVD burner. In case that an autorun file may not exist, the computer program is always available in the DVD for the user to execute it, although said solution is not as efficient.

As a result, the computer program comprises the first module to verify whether the computer program has launched from a DVD; the second module to copy the computer program in a safe area of the operating system; the third module to cause the launching of the computer program on said safe area; the fourth module to cause the closing of the computer program; the fifth module to show the user interface that allows browsing the data and selecting those that may be recorded; the sixth module to verify whether the DVD may be finished after the recording of the data; the seventh module to record a new recording session, in the recordable area of the DVD; and the eight module to add the computer program and the autorun file to the new recording session.

Obviously, there is a possibility that said module distribution inside the computer program may be different, in a way that, for example, a module may do functions from other modules. In the same manner, it is possible that several computer programs that do the same functions of other modules exist, said different computer programs being "connected" between them (for example, through parameters), with the aim of the correct operation of the invention.

Therefore, the computer program for controlling the recording, in the described method, may do two alternatives, depending on the medium where it is executed, which is set on step (E) of verification whether the computer program is executed on the optical recording disc or not. This way, when the computer program is executed on the safe area of the operating system, it performs the steps of:
A) Obtaining the data to be recorded on the optical recording disc;
B) Adding said data in a new recording session;
C) Adding the means for controlling the recording to the new recording session, at least when the optical recording disc may not be finished after the recording of said new recording session;
D) Recording said new recording session in the optical recording disc.

Said steps of the method may also be described in the following manner:
A) Obtaining the data to be recorded on the optical recording disc;
B) Adding said data to the new recording session;
C) A step selected from:
   C.1) Adding the means for controlling the recording to the new recording session, or
   C.2) Verifying whether the optical recording disc may be finished and, in case of positive result in said verification; adding the means for controlling the new recording session;
D) Recording said new recording session in the optical recording disc.

When the computer program is being executed on the optical recording disc (the DVD, in the present preferred embodiment), it performs the following steps:
F) Copying the computer program to a safe area of the operating system;
G) Executing the computer program for controlling the recording, on the safe area of the operating system;
H) Closing the computer program for controlling the recording, which is being executed on the optical recording disc.
After said step (H), since the computer program for controlling the recording session executes on the safe area of the operating system, the control of the method changes to step (A) of obtaining of the data to be recorded on the optical recording disc, by means of the user interface.

Although specific embodiments of the present invention have been described and depicted, it is apparent that the skilled in the art will be able to introduce variants and modifications, or replace the details by other technically equivalent, without departing from the scope of protection defined by the enclosed claims.

For example, the execution of the computer program for controlling the recording, whether on the DVD or on the safe area of the operating system, may be performed manually, by means of the action of the user, and therefore there is no need of the autorun file.

On the other hand, it can be verified or not whether the user wants to finish the disc. In case that it is not verified, the computer program for controlling the recording automatically adds itself to any new recording session that may be done on the optical recording disc, to be recorded on said disc. In case that the autorun file exists, said file may also be added to said new recording session.

Furthermore, it is possible that the invention incorporates mechanisms to recover the data from the last saved session, to make them accessible by means of the recording of the new session. This way, for example, the user may recover the data (all of them or the wanted ones) from the last saved session by means of the action on a control element set aside to do so, located in the users interface shown by the fifth module of the program for controlling the recording.

Also, although the embodiments of the invention described with reference of the drawings comprise computer apparatus and processes performed in computer apparatus, the invention also extends to computer programs, specifically to computer programs in or on carrier means, adapted for putting the invention into practice. The computer may be in the form of source code, object code or in a code intermediate source and object code such as in partially compiled form, or any other form suitable for use in the implementation of the processes according to the invention. The carrier means may be any entity or device capable of carrying the program.

For example, the carrier means may comprise a storage medium, such as a ROM, for example a CD ROM or a semiconductor ROM, or a magnetic recording medium, for example a floppy disc or a hard disc. Further, the carrier may be a transmissible carrier such as an electrical or optical signal which may be conveyed via an electrical or optical cable or by radio or other means. When the computer program is embodied in a signal which may be conveyed directly by a cable or other device or means, the carrier may be constituted by such cable or other device or means.

Alternatively, the carrier may be an integrated circuit in which the computer program is embedded, said circuit being adapted to do, or to be used in the embodiment of, the relevant methods.

## Claims

1. A method for recording data on an optical recording disc, using means for controlling the recording, the method comprising the steps of:
A) Obtaining the data to be recorded on the optical recording disc;
B) Adding said data in a new recording session;
C) Adding the means for controlling the recording to the new recording session, at least when the optical recording disc may not be finished after the recording of said new recording session;
D) Recording said new recording session in the optical recording disc.

2. A method according to claim 1, **characterized in that** it comprises a step (E) of verification whether the means for controlling the recording are executed on the optical recording disc, and, in case of positive result in said step (E), comprises the steps of:
F) Copying the means for controlling the recording to a safe area of the operating system;
G) Executing the means for controlling the recording on a safe area of the operating system;
H) Closing the means for controlling the recording, which are being executed on the optical recording disc.

3. A method according to claim 1, **characterized in that** it comprises step (E) of verification whether the means for controlling the recording are executed on the optical recording disc, and, in case of negative result in said step (E), the control of the method goes to step (A) of obtaining the data to be recorded on the optical recording disc.

4. A method according to any of the preceding claims, **characterized in that** it comprises a step (X) of verification of whether the optical recording disc may be finished after step (D) of recording the data on the optical recording disc.

5. A system for recording data in an optical recording disc, using means for controlling the recording that comprise means for obtaining the data to be recorded on the optical recording disc; means for adding said data in a new recording session; means for adding the own means for controlling the recording in the new recording session, at least when the optical recording disc may not be finished after the recording of said new recording session; and means for recording the new recording session on the optical recording disc.

6. A system according to claim 5, **characterized in that** the optical recording disc comprises the means for controlling the recording.

7. A system according to any of claims 5 or 6, **characterized in that** the optical recording disc comprises a read-only area and a recordable area, and **in that** the means for controlling the recording are pre-recorded on said read-only area of the optical recording disc.

8. A system according to any of claims 5 or 6, **characterized in that** the means for controlling the recording are pre-recorded on the optical recording disc, in a recording session.

9. A system according to any of claims 5 to 8, **characterized in that** the means for controlling the recording comprise a computer program for controlling the recording.

10. A system according to claim 9, **characterized in that** the means for controlling the recording comprise an autorun file of the computer program for controlling the recording.

11. A computer program comprising program instructions for causing a computer system to perform the method according to any of claims 1 to 4.

12. A computer program according to claim 11, **characterized in that** it is stored in storing means.

13. A computer program according to claim 11, **characterized in that** it is carried on a carrier signal.
